# FASCICULE DE BREVET EUROPEEN

(11) **EP 3 642 496 B1**
(45) Date de publication et mention de la délivrance du brevet: **11.10.2023**
(21) Numéro de dépôt: 18729172.9
(22) Date de dépôt: 13.06.2018
(51) Int. Cl.: G04B 31/012, F16C 19/16, F16C 33/58, G04B 31/004, G04B 5/18

(54) **PIECE MECANIQUE MODULAIRE**
MECHANISCHES MODULTEIL
MODULAR MECHANICAL PART

(30) Priorité: 22.06.2017 EP 17177523
(43) Date de publication de la demande: 29.04.2020
(73) Titulaire: ETA SA Manufacture Horlogère Suisse, 2540 Grenchen (CH)
(72) Inventeur: COURVOISIER, Raphaël, 2035 Corcelles (CH); BERDAT, Xavier, 2824 Vicques (CH); CONUS, Thierry, 2543 Lengnau (CH)
(74) Mandataire: ICB SA
(86) Numéro de dépôt international: PCT/EP2018/065715
(87) Numéro de publication internationale: WO 2018/234125

(56) Documents cités:
- EP-A1- 0 573 839
- CH-A1- 707 859
- GB-A- 754 285

## Description

### Domaine technique de l'invention

L'invention concerne une pièce mécanique comprenant un roulement à billes. L'invention trouve une application plus particulièrement dans le domaine de l'horlogerie mais peut également être envisagée pour des applications dans le domaine du médical ou de la micromécanique.

### Arrière-plan technologique de l'invention

De manière connue, un roulement à billes comprend une bague externe et une bague interne concentriques définissant ensemble un chemin de roulement pour une pluralité de billes de manière à ce que chaque bille soit en contact avec les dites bagues en une pluralité de points de contact, les billes étant séparées les unes des autres par une cage. Un tel roulement est par exemple décrit dans la publication EP1520111.

Afin d'entraîner en rotation l'une des bagues par rapport à l'autre, la paroi externe de la bague externe est généralement dentée pour engrener avec un rouage externe et la bague interne peut être percée d'un évidement afin de permettre sa fixation. Un tel roulement peut être utilisé entre autre pour suspendre une masse oscillante dans un mouvement de montre mécanique.

Cependant, chaque mouvement horloger possède ses propres moyens de fixation et ses propres rouages, de sorte qu'un roulement est de fait destiné exclusivement à un mouvement horloger hôte pour lequel il a été conçu. Ceci implique donc de fabriquer, stocker et gérer un grand nombre de références de roulements dédiés chacun à un mouvement hôte, ce qui complique et renchérit le processus de fabrication des mouvements.

Par ailleurs bien que fournissant des propriétés satisfaisantes pour les applications horlogères décrites ci-dessus, les roulements présentent l'inconvénient d'être réalisés généralement en matériaux magnétiques et d'être susceptibles de perturber la marche des mouvements équipés de ces roulements, après avoir été soumis à un champ magnétique.

Le document GB754285A décrit une pièce mécanique horlogère comportant un roulement à billes, ledit roulement comportant
- une pluralité de billes (16)
- une bague interne divisée en deux bagues (25, 26), les deux bagues internes étant solidaires l'une de l'autre et comportant des surfaces planes en contact l'une avec l'autre; et
- une bague externe (30) formée d'une seule pièce.

Dans ce document, les bagues interne externe définissent ensemble un chemin de roulement pour le billes. De plus, la bague interne comprend un évidement central et la pièce mécanique comprend également un noyau de couplage (27) fixé à l'intérieur de l'évidement central de la bague interne, ledit noyau de couplage étant adapté pour coopérer avec un moyen de couplage extérieur (3) correspondant pour permettre la rotation de la bague interne par rapport à la bague externe.

### Résumé de l'invention

L'invention vise à améliorer la technique connue, en proposant une solution visant à pallier tout ou partie des inconvénients ou limites des roulements décrits ci-dessus.

A cet effet, l'invention propose une pièce mécanique horlogère telle que définie dans la revendication indépendante 1 annexée. Des réalisations préférées sont définies dans les revendications dépendantes.

### Brève description des figures

D'autres caractéristiques et avantages de la présente invention ressortiront plus clairement de la description détaillée qui suit d'exemples de mise en oeuvre de pièce mécaniques selon l'invention. Ces exemples sont donnés à titre purement illustratif et non limitatif et sont à lire en liaison avec les dessins annexés dans lesquels :
- la figure 1 est une vue en coupe d'un roulement connu de l'art antérieur et utilisable par exemple dans un dispositif de remontage automatique d'une montre bracelet,
- les figures 2-4 sont des vues en coupe de pièces mécaniques selon l'invention telle que revendiquée, et
- la figure 5 est vue de dessus schématique d'un dispositif de remontage automatique utilisable dans une montre bracelet comprenant une pièce mécanique selon un mode de réalisation de l'invention.

### Description détaillée de modes de réalisation de l'invention

Comme dit précédemment, l'invention concerne une pièce mécanique comportant un roulement à billes, ledit roulement comportant :
- une pluralité de billes 1 ;
- une bague interne 2 et une bague externe 3 concentriques, la bague interne et la bague externe définissent ensemble un chemin de roulement pour lesdites billes de manière à ce que chaque bille soit en contact avec lesdites bagues en une pluralité de points de contact.

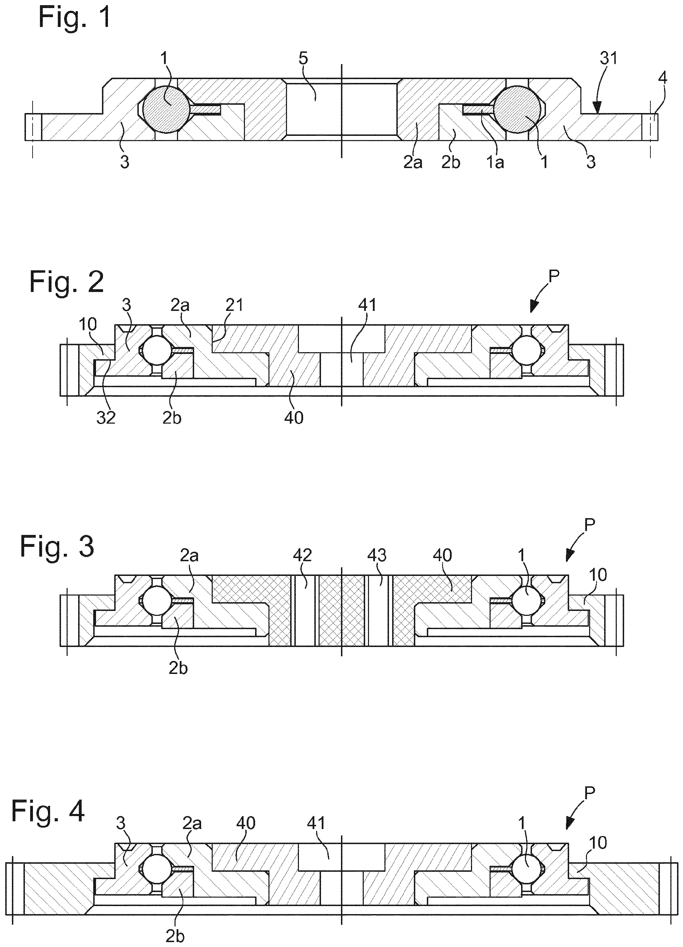

La figure 1 montre un roulement connu de l'art antérieur et utilisable par exemple dans un dispositif de remontage automatique d'une montre bracelet. La bague interne est ici réalisée en deux parties 2a, 2b et une cage 1a est positionnée entre les billes pour maintenir les billes espacées les unes des autres. L'assemblage du roulement se fait en positionnant les billes 1 et la cage 1a dans le chemin de roulement défini par la bague externe et la partie 2a de la

bague interne, la partie 2b restante de la bague interne étant mise en place ensuite pour fermer le roulement.

Dans une variante, la bague interne est réalisée en une seule partie et la bague externe est réalisée en deux parties.

Pour limiter les frottements, la bague externe 3, la bague interne 2, et les billes 1 peuvent être réalisées en acier inox ; en variante, les bagues peuvent être réalisées en acier inox et les billes en céramique, par exemple en oxyde de zirconium ; en variante encore, les bagues et les billes peuvent être en céramique.

Le roulement comprend en outre une paroi externe de la bague externe 3 qui est dentée (dents 4) sur au moins une partie de sa hauteur pour engrener avec un rouage extérieur correspondant. La paroi externe comprend également une portée 31 sur laquelle peut venir s'appuyer la masse oscillante (non représentée) à fixer. La bague interne 2a, 2b est quant à elle percée d'un évidement central 5 adapté pour coopérer avec un moyen de couplage (non représenté) tel qu'un axe ou une vis, ou un rouage.

Par rapport à un roulement selon la figure 1, une pièce mécanique selon l'invention se distingue en ce qu'elle comprend également :
- un noyau de couplage 40 fixé à l'intérieur d'un évidement central 21 de la bague interne ; ou
- une couronne de couplage 10 fixée sur une paroi externe de la bague externe et un noyau de couplage 40 fixé à l'intérieur d'un évidement central 21 de la bague interne.

Ce dernier mode de réalisation est représenté sur les figures 2 à 5.

Dans l'exemple illustré, la couronne de couplage 10 est fixée directement sur une paroi externe cylindrique de la bague externe. La couronne de couplage 10 est adaptée pour coopérer avec un moyen de couplage correspondant d'un élément fonctionnel extérieur pour permettre la rotation de la bague externe par rapport à la bague interne. La couronne de couplage selon l'invention vient en lieu et place des dents 4 d'un roulement connu. Il va de soi que selon des variantes de réalisation la couronne 10 peut être fixée sur ou sous la bague extérieure.

Dans les exemples représentés fig. 2-5, la couronne de couplage est une couronne dentée 10 adaptée pour engrener avec un rouage extérieur correspondant. Une telle couronne est bien adaptée notamment pour l'entraînement d'un rouage par une masse oscillante dans un mouvement horloger mécanique. Afin de faciliter la mise en place et le positionnement de la couronne de couplage sur la bague externe, la bague externe peut comprendre une portée 32 sur laquelle vient s'appuyer une portée correspondante d'une paroi interne de la couronne de couplage. Dans l'exemple de la figure 4, la couronne de couplage utilisée a un diamètre externe plus grand que le diamètre externe de la couronne de couplage utilisée pour les exemples des figures 2 et 3, les éléments principaux du roulement, à savoir les billes 1, la bague interne 2 (2a, 2b) et la bague externe 3 sont par contre les mêmes.

La couronne de couplage et la bague externe sont assemblées par collage, soudage, sertissage ou chassage. Pour des applications où un remplacement de la couronne doit être envisagé au cours de la durée d'utilisation de la pièce mécanique, une fixation amovible par chassage est préférée.

Pour une utilisation en environnement magnétique fort, dans les exemples mis en oeuvre, la couronne de couplage 10 est réalisée en un matériau amagnétique, ici un alliage Cuivre- Béryllium typiquement un alliage CuBe2Pb ou CuBe2.

D'autres matériaux amagnétiques peuvent être envisagés, des matériaux choisi parmi le groupe comprenant un acier du type austénitique, de préférence inoxydable, un alliage de cobalt du type austénitique, un alliage de nickel du type austénitique, un alliage de titane amagnétique, un alliage d'aluminium amagnétique, un laiton (Cu-Zn) ou un laiton spécial (Cu-Zn avec Al et/ou Si et/ou Mn), un bronze (Cu-Sn), un bronze à l'aluminium, un cuivre-aluminium (comprenant optionnellement Ni et/ou Fe), un cuivre-nickel, un Maillechort (Cu-Ni-Zn), un cuivre-nickel-étain, un cuivre-nickel-silicium, un cuivre-nickel-phosphore, un cuivre-titane, les proportions des différents éléments des alliages étant choisies pour leur conférer des propriétés amagnétiques ainsi qu'une bonne usinabilité.

Par exemple, l'acier austénitique est un acier austénitique inox HIS (High Interstitial Steels), tel que l'acier Cr-Mn-N P2000 de Energietechnik Essen GmbH.

L'alliage de cobalt du type austénitique peut comprendre au moins 39% de cobalt, typiquement un alliage connu sous le nom « Phynox » ou la désignation DIN K13C20N16Fe15D7 ayant typiquement 39% de Co, 19% de Cr, 15% de Ni et 6% de Mo, 1.5% de Mn, 18% de Fe et le soldes d'additifs.

L'alliage de nickel de type austénitique peut comprendre au moins 33% de nickel typiquement un alliage connu sous la désignation MP35N^{®} ayant typiquement 35% de Ni 20% de Cr, 10% de Mo, 33% de Co et le solde d'additifs.

L'alliage de titane comprend de préférence au moins 85% de titane.

Les laitons peuvent comprendre les alliages CuZn39Pb3, CuZn37Pb2, ou CuZn37.

Les laitons spéciaux peuvent comprendre les alliages CuZn37Mn3Al2PbSi, CuZn23Al3Co ou CuZn23Al6Mn4Fe3Pb.

Les Maillechort peuvent comprendre les alliages CuNi25Zn11Pb1Mn, CuNi7Zn39Pb3Mn2 ou CuNi18Zn19Pb1.

Les bronzes peuvent comprendre les alliages CuSn9 ou CuSn6.

Les bronzes à l'aluminium peuvent comprendre les alliages CuAl9 ou CuAl9Fe5Ni5.

Les alliages cuivre-nickel peuvent comprendre l'alliage CuNi30.

Les alliages cuivre-nickel-étain peuvent comprendre les alliages CuNi15Sn8, CuNi9Sn6 ou CuNi7.5Sn5 (commercialisé par exemple sous la dénomination Declafor).

Les alliages cuivre-titane peuvent comprendre l'alliage CuTi3Fe.

Les alliages cuivre-nickel-silicium peuvent comprendre l'alliage CuNi3Si.

Les alliages cuivre-nickel-phosphore peuvent comprendre l'alliage CuNi1P.

Les valeurs de composition sont indiquées en pourcentage massique. Les éléments sans indication de valeur de composition sont soit le reste (majoritaire) soit des éléments pour lesquels le pourcentage dans la composition est inférieur à 1% en poids.

L'alliage de cuivre amagnétique peut être également un alliage ayant pour composition massique entre 14.5% et 15.5% de Ni, entre 7.5% et 8.5% de Sn, au maximum 0.02% de Pb et le reste de Cu. Un tel alliage est commercialisé sous la marque Toughmet^{®} par la société Materion.

Bien évidemment, d'autres alliages amagnétiques sont envisageables dès lors que la proportion de leurs constituants leur confère des propriétés amagnétiques ainsi qu'une bonne usinabilité.

La bague interne 2 comprend un évidement central 21 s'étendant selon un axe de la bague interne. L'évidement central 21 est concentrique à la bague interne et le noyau de couplage 40 est fixé à l'intérieur de l'évidement 21. Le noyau de couplage 40 est adapté pour coopérer avec un moyen de couplage correspondant d'un élément fonctionnel extérieur pour permettre la rotation de la bague interne 2 par rapport à la bague externe 3.

A cet effet, dans l'exemple des figures 2 et 4, le noyau de couplage 40 est percé d'un évidement central 41 concentrique à la bague interne 2 ; une paroi de l'évidement central 41 est dentée pour engrener avec un rouage externe.

Selon un autre mode de réalisation, dans l'exemple de la figure 3, deux évidements 42, 43 filetés sont prévus pour une fixation par deux vis formant un moyen de couplage (fixation ici) externe. En variante, un unique évidement fileté en position centrale peut aussi être envisagé.

Le noyau de couplage 40 et la bague interne sont assemblés par collage, soudage, sertissage ou chassage. Pour certaines applications, une fixation amovible par chassage est préférable.

Le noyau de couplage 40 est réalisé en un matériau amagnétique pour limiter sa sensibilité aux champs magnétiques. A titre d'exemple, le noyau peut être réalisé ici comme la couronne de couplage 10 en un alliage Cuivre- Béryllium typiquement un alliage CuBe2Pb ou CuBe2. Les autres matériaux appartenant à la liste de matériaux mentionnés en liaison avec la couronne de couplage 10 conviennent également.

Pour des raisons esthétiques, la couronne de couplage 10 et/ou le noyau de couplage 40 peuvent être recouverts d'un revêtement modifiant un aspect de leurs surfaces extérieures par exemple par des traitements de dorage, nickelage ou rhodiage ou tout autre dépôt PVD.

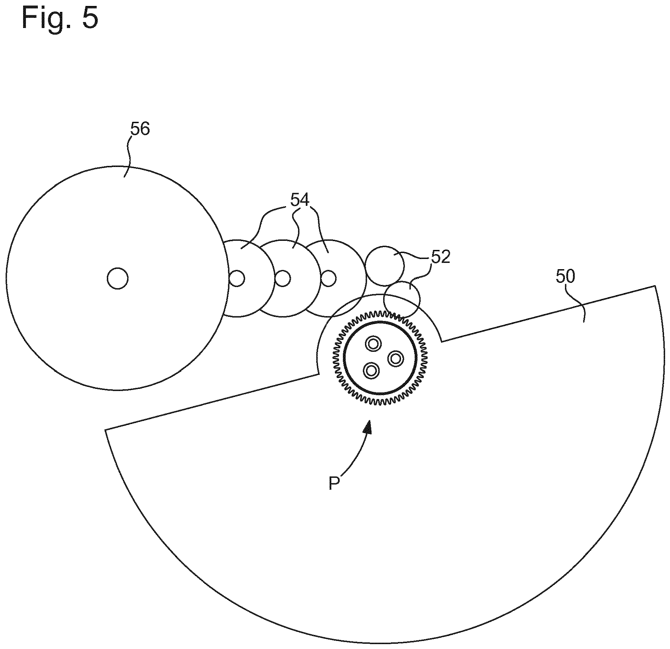

La figure 5 montre un dispositif de remontage automatique utilisable dans une montre-bracelet équipée d'une pièce mécanique P selon l'invention qui porte la masse oscillante 50. La pièce mécanique P fixée sur le mouvement, par exemple vissé sur une planche ou pont d'automatique par l'intermédiaire du noyau de couplage 40.

La couronne de couplage 60 est de la masse oscillante 30 et entraîne en rotation un système redresseur représenté schématiquement à la figure 5 par les deux mobiles redresseurs 52 bien connues et aptes à transformer les mouvements de rotation de la masse quel que soit leur sens en un mouvement de remontage dans un seul sens, par exemple au moyen de roues à cliquet. Les mobiles redresseurs 52 sont suivis par un rouage de remontage 54 engrenant à son extrémité avec le rochet 56 afin d'armer le ressort de barillet.

### Nomenclature

- 1: billes
- 1a :: cage
- 2: bague interne
- 2a, 2b :: deux parties de la bague interne
- 21: évidement
- 3: bague externe
- 31: portée
- 32: portée
- 4: dents
- 5: évidement central
- 10: couronne de couplage
- 40: noyau de couplage
- 41: évidement central
- 42, 43: évidements
- 50: masse oscillante
- 52: mobiles inverseurs
- 54: rouage de remontage
- 56: rochet

## Revendications

1. Pièce mécanique horlogère comportant un roulement à billes, ledit roulement comportant :
• une pluralité de billes (1) ;
• une bague interne (2) et une bague externe (3) concentriques, la bague interne et la bague externe définissant ensemble un chemin de roulement pour lesdites billes de manière à ce que chaque bille soit en contact avec lesdites bagues en une pluralité de points de contact, pièce mécanique dans laquelle la bague interne (2) comprend deux bagues (2a, 2b), ces deux bagues étant solidaires l'une de l'autre et comportant des surfaces cylindriques en contact l'une avec l'autre, alors que la bague externe (3) est formée d'une seule pièce, la bague interne (2) comprenant un évidement central (21) s'étendant selon un axe de la bague interne, la pièce mécanique comprenant également un noyau de couplage (40) fixé à l'intérieur de l'évidement central de la bague interne, ledit noyau de couplage étant adapté pour coopérer avec un moyen de couplage extérieur correspondant pour permettre la rotation de la bague interne par rapport à la bague externe, le noyau de couplage étant réalisé en un matériau amagnétique, et comprenant:
• au moins un évidement fileté (42, 43) adapté pour recevoir un moyen de fixation d'un élément fonctionnel extérieur, ou
• un évidement central (41) concentrique à la bague interne, une paroi de l'évidement central étant dentée pour engrener avec une denture correspondante d'un rouage externe.

2. Pièce mécanique horlogère selon la revendication 1 dans laquelle le noyau de couplage et la bague interne sont assemblés par collage, soudage, sertissage ou chassage.

3. Pièce mécanique horlogère selon la revendication 1 ou 2 **caractérisée en ce qu'**elle comprend également une couronne de couplage (10) fixée sur une paroi externe de la bague externe, ladite couronne de couplage étant adaptée pour coopérer avec un moyen de couplage correspondant d'un élément fonctionnel extérieur.

4. Pièce mécanique horlogère selon la revendication 3 **caractérisée en ce que** la couronne de couplage est réalisée en un matériau amagnétique.

5. Pièce mécanique horlogère selon l'une des revendications précédentes, **caractérisée en ce que** la couronne de couplage et/ou le noyau de couplage sont réalisés en un matériau choisi parmi le groupe comprenant un acier du type austénitique, un alliage de cobalt du type austénitique, un alliage de nickel du type austénitique, un alliage de titane, un alliage d'aluminium, un laiton à base de cuivre et de zinc, un cuivre-béryllium, un Maillechort, un bronze, un bronze à l'aluminium, un cuivre-aluminium, un cuivre-nickel, un cuivre-nickel-étain, un cuivre-nickel-silicium, un cuivre-nickel-phosphore, un cuivre-titane, le téflon afin de limiter sa sensibilité aux champs magnétiques.

6. Pièce mécanique horlogère selon l'une des revendications précédentes **caractérisée en ce que** la couronne de couplage et/ou le noyau de couplage sont recouverts d'un revêtement modifiant un aspect d'une surface extérieure de la couronne de couplage et/ou du noyau de couplage.

7. Pièce mécanique horlogère selon la revendication 5 **caractérisée en ce que** la couronne de couplage et/ou le noyau de couplage sont réalisés en aluminium anodisé.

8. Pièce mécanique horlogère selon l'une des revendications précédentes **caractérisée en ce que** la bague externe et la bague interne sont réalisées en inox.

9. Pièce mécanique horlogère selon la revendication 8 **caractérisée en ce que** les billes sont réalisées en acier ou en céramique, de préférence en oxyde de zirconium.

10. Pièce mécanique horlogère selon l'une quelconque des revendications précédentes **caractérisée en ce qu'**elle porte une masse oscillante dans un dispositif de remontage automatique d'un mouvement d'horlogerie.

## Patentansprüche

1. Mechanisches Uhrenbauteil, das ein Kugellager umfasst, wobei das Lager Folgendes umfasst:
• eine Vielzahl von Kugeln (1);
• einen konzentrischen Innenring (2) und einen konzentrischen Außenring (3), wobei der Innenring und der Außenring gemeinsam eine Laufbahn für die Kugeln definieren, so dass jede Kugel an einer Vielzahl von Kontaktpunkten mit den Ringen in Kontakt steht,
wobei im mechanischen Bauteil der Innenring (2) zwei Ringe (2a, 2b) umfasst, wobei die beiden Ringe aneinander befestigt sind und zylindrische Flächen aufweisen, die miteinander in Kontakt stehen, während der Außenring (3) einstückig ausgebildet ist, wobei der Innenring (2) eine zentrale Aussparung (21) umfasst, die sich entlang einer Achse des Innenrings erstreckt, wobei das mechanische Bauteil außerdem einen Kupplungskern (40) umfasst, der im Inneren der zentralen Aussparung des Innenrings fixiert ist, wobei der Kupplungskern so ausgelegt ist, dass er mit einem entsprechenden äußeren Kupplungsmittel zusammenwirkt, um die Drehung des Innenrings im Verhältnis zum Außenring zu ermöglichen, wobei der Kupplungskern aus einem nichtmagnetischen Material hergestellt ist und Folgendes umfasst:
• mindestens eine Gewindeaussparung (42, 43), die so ausgelegt ist, dass sie ein Fixiermittel eines äußeren Funktionselements aufnimmt, oder
• eine zentrale Aussparung (41), die konzentrisch mit dem Innenring ist, wobei eine Wand der zentralen Aussparung gezahnt ist, um mit einer entsprechenden Verzahnung eines äußeren Zahnrads zu kämmen.

2. Mechanisches Uhrenbauteil nach Anspruch 1, wobei der Kupplungskern und der Innenring durch Kleben, Schweißen, Crimpen oder Einpressen zusammengefügt sind.

3. Mechanisches Uhrenbauteil nach Anspruch 1 oder 2, **dadurch gekennzeichnet, dass** es außerdem eine Kupplungskrone (10) umfasst, die an einer Außenwand des Außenrings fixiert ist, wobei die Kupplungskrone so ausgelegt ist, dass sie mit einem entsprechenden Kupplungsmittel eines äußeren Funktionselements zusammenwirkt.

4. Mechanisches Uhrenbauteil nach Anspruch 3, **dadurch gekennzeichnet, dass** die Kupplungskrone aus einem nichtmagnetischen Material hergestellt ist.

5. Mechanisches Uhrenbauteil nach einem der vorhergehenden Ansprüche, **dadurch gekennzeichnet, dass** die Kupplungskrone und/oder der Kupplungskern aus einem Material hergestellt ist, das aus der Gruppe ausgewählt ist, die aus austenitischem Stahl, austenitischer Kobaltlegierung, austenitischer Nickellegierung, Titanlegierung, Aluminiumlegierung, Messing auf Kupfer- und Zinkbasis, Kupfer-Beryllium, Neusilber, Bronze, Aluminiumbronze, Kupfer-Aluminium, Kupfer-Nickel, Kupfer-Nickel-Zinn, Kupfer-Nickel-Silizium, Kupfer-Nickel-Phosphor, Kupfer-Titan und Teflon besteht, um ihre bzw. seine Empfindlichkeit gegenüber Magnetfeldern zu begrenzen.

6. Mechanisches Uhrenbauteil nach einem der vorhergehenden Ansprüche, **dadurch gekennzeichnet, dass** die Kupplungskrone und/oder der Kupplungskern mit einer das Aussehen einer Außenfläche der Kupplungskrone und/oder des Kupplungskerns verändernden Beschichtung überzogen ist.

7. Mechanisches Uhrenbauteil nach Anspruch 5, **dadurch gekennzeichnet, dass** die Kupplungskrone und/oder der Kupplungskern aus eloxiertem Aluminium bestehen.

8. Mechanisches Uhrenbauteil nach einem der vorhergehenden Ansprüche, **dadurch gekennzeichnet, dass** der Außenring und der Innenring aus Edelstahl bestehen.

9. Mechanisches Uhrenbauteil nach Anspruch 8, **dadurch gekennzeichnet, dass** die Kugeln aus Stahl oder Keramik, vorzugsweise Zirkonoxid, hergestellt werden.

10. Mechanisches Uhrenbauteil nach einem der vorhergehenden Ansprüche, **dadurch gekennzeichnet, dass** es in einer automatischen Aufziehvorrichtung eines Uhrwerks eine Schwungmasse trägt.

## Claims

1. Mechanical timepiece part including a ball bearing, said bearing including:
• a plurality of balls (1);
• an inner ring (2) and an outer ring (3) that are concentric, the inner ring and the outer ring together defining a race for said balls such that each ball is in contact with said rings at a plurality of points of contact,
in which mechanical part the inner ring (2) comprises two rings (2a, 2b), these two rings being rigidly connected to one another and having cylindrical surfaces in contact with one another, whereas the outer ring (3) is formed in one piece, the inner ring (2) comprising a central recess (21) extending along an axis of the inner ring, the mechanical part further comprising a coupling boss (40) attached inside the central recess of the inner ring, said coupling boss being adapted to cooperate with a corresponding external coupling means to allow the inner ring to rotate relative to the outer ring, the coupling boss being made of a non-magnetic material, and comprising:
• at least one threaded recess (42, 43) adapted to receive a means for attaching an external functional element, or
• a central recess (41) concentric with the inner ring, a wall of the central recess being toothed in order to mesh with a corresponding toothing of an external gear train.

2. Mechanical timepiece part according to claim 1, wherein the coupling boss and the inner ring are assembled by bonding, welding, crimping or press fitting.

3. Mechanical timepiece part according to claim 1 or 2, **characterised in that** it further comprises a coupling crown (10) attached to an outer wall of the outer ring, said coupling crown being adapted to cooperate with a corresponding coupling means of an external functional element.

4. Mechanical timepiece part according to claim 3, **characterised in that** the coupling crown is made of a non-magnetic material.

5. Mechanical timepiece part according to one of the preceding claims, **characterised in that** the coupling crown and/or the coupling boss are made of a material selected from the group comprising a steel of the austenitic type, a cobalt alloy of the austenitic type, a nickel alloy of the austenitic type, a titanium alloy, an aluminium alloy, a copper-zinc brass, a copper-beryllium, a nickel-silver, a bronze, an aluminium bronze, a copper-aluminium, a copper-nickel, a copper-nickel-tin, a copper-nickel-silicon, a copper-nickel-phosphorus, a copper-titanium, and Teflon in order to limit the sensitivity thereof to magnetic fields.

6. Mechanical timepiece part according to one of the preceding claims, **characterised in that** the coupling crown and/or the coupling boss are covered with a coating that modifies an appearance of an outer surface of the coupling crown and/or of the coupling boss.

7. Mechanical timepiece part according to claim 5, **characterised in that** the coupling crown and/or the coupling boss are made of anodised aluminium.

8. Mechanical timepiece part according to one of the preceding claims, **characterised in that** the outer ring and the inner ring are made of stainless steel.

9. Mechanical timepiece part according to claim 8, **characterised in that** the balls are made of steel or ceramic, preferably zirconium oxide.

10. Mechanical timepiece part according to any one of the preceding claims, **characterised in that** it carries an oscillating weight in an automatic winding device of a horological movement.
